# EUROPÄISCHE PATENTANMELDUNG

(11) **EP 0 563 729 A2**
(43) Veröffentlichungstag der Anmeldung: **06.10.1993**
(21) Anmeldenummer: 93104651.0
(22) Anmeldetag: 22.03.1993
(51) Int. Cl.: C07F 9/40, C08F 230/02, C08F 220/04, C08F 220/54, C11D 3/37, C02F 5/14

(54) **Alkenylaminoalkan-1,1-diphosphonsäurederivate und deren Copolymere mit ungesättigten Carbonsäuren**

(30) Priorität: 28.03.1992 DE 4210296
(71) Anmelder: HOECHST AKTIENGESELLSCHAFT, D-65926 Frankfurt am Main (DE)
(72) Erfinder: Krull, Matthias, Dr., W-6232 Bad Soden/Taunus (DE); Naumann, Christoph, Dr., W-6272 Niedernhausen (DE); Hoffmann, Herrmann, Dr., W-6233 Kelkheim/Taunus (DE)

(57) **Zusammenfassung**

Gegenstand der Erfindung sind Alkenylaminoalkan-1,1-diphosphonsäurederivate der Formel I 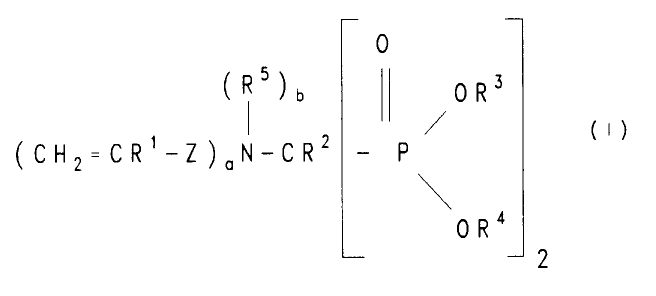
wobei R¹ bis R⁵, a, b, und Z die in der Beschreibung angegebene Bedeutung besitzen und Verfahren zu deren Herstellung.
Ein weiterer Gegenstand der Erfindung sind Copolymere enthaltend 0,1 - 50 Mol-%, bevorzugt 1-15 Mol-% mindestens einer Alkenylaminoalkan-1,1-diphosphonat-Einheit der Formel 1
und 99,9 - 50 Mol-%, bevorzugt 99 - 85 Mol-% mindesten einer Carbonsäure-Einheit der Formel II

R⁶R⁷C = CR⁸Y (II)

wobei R⁶, R⁷, R⁸ und Y die in der Beschreibung angegebene Bedeutung besitzen sowie Verfahren zu deren Herstellung. Diese Copolymere finden Verwendung als Steinverhinderer, als Erdalkali- und Schwermetallkomplexbildner und/oder Sequestriermittel und als Builder bzw. Co-Builder in Waschmitteln.

## Beschreibung

Beim Fördern Von Öl, Wasser und Gas aus unterirdischen Formationen kann durch das Mischen von unverträglichen wäßrigen Medien, durch Temperatur- sowie Druckänderungen Steinbildung auftreten. Steinbildungen können u.a. zur Verstopfung von Formationen, Bohrlöchern, Förderrohren und Pipelines sowie zu hängengebliebenen Pumpen und Ventilen führen und damit Produktionsausfälle und erhebliche Reparaturkosten verursachen.

Zur Verhinderung der Scale-Bildung, d.h. der Ausfällung von wenig löslichen Salzen der Erdalkalimetalle werden salinen Wässern zum einen hochmolekulare Polycarbonsäuren (bevorzugt gegen Erdalkalisulfat) und zum anderen niedermolekulare Polyelektrolyte wie Aminomethylenphosphonsäuren (bevorzugt gegen Erdalkalicarbonat) in unterstöchiometrischen Mengen im Bereich von 1 bis 100 ppm zugesetzt. Man nimmt an, daß für diesen sogenannten "Threshold-Effekt" der Polyelektrolyt auf den Kristallitoberflächen absorbiert wird und so das weitere Kristallwachstum stört bzw. unterbindet.

Aminomethylenphosphonsäuren (z. B. ®Dequest, Monsanto) sowie andere niedermolekulare Polyelektrolyte wie z.B. EDTA und Triphosphate besitzen auf Grund ihres guten Calcium- und Schwermetallbindevermögens auch breite praktische Anwendung in der Bleichwäsche. Die vorhandenen Schwermetalle verringern in Waschmittelformulierungen die Lagerstabilität und schädigen bei der Bleiche die Fasern. Desgleichen haben hochmolekulare Polycarbonsäuren eine große Bedeutung als Co-Builder in phosphatfreien und phosphatreduzierten Waschmitteln (Ragnetti; Tenside, Surfactants, Detergents 1989, 26,30). Vermutlich transportieren sie wasserlösliche Metallionen, besonders Calciumionen, aus der wäßrigen Waschmittellauge in die wasserlöslichen Zeolithe.

Aus US-A-5,126,418 sind Copolymere aus Alkenylaminomethylenphosphonsäuren und ungesättigten Carbonsäuren bekannt, die sich als Komplexbildner, insbesondere in Waschmitteln, als Builder, Peroxid-Stabilisatoren sowie als Granulierhilfsmittel für Bleichaktivatoren und in der Erdölförderung als Scale-Inhibitoren mit Korrosionsschutzwirkung eignen.

Die JP-OS-54/135 724 beschreibt ein Verfahren zur Herstellung von Aminomethylenphosphonsäureestern sowie deren saure Hydrolyse zu den freien Phosphonsäuren, z.B. die Synthese von N-Diallylaminomethylendiphosphonsäuretetraethylester und der entsprechenden Säure.

In JP-OS-50/72 987 ist die Homo- und Copolymerisation von Diallylamino-methylenphosphonsäure mit ethylenisch ungesättigten Monomeren zu hochmolekularen (Co)polymeren beschrieben. Bei der Polymerisation von Diallylammoniumsalzen entstehen Piperidiniumgruppen enthaltende, kaum verzweigte Polymere (Lancaster et. al.; Polym. Lett. 1976, 14,549).

Überraschender Weise wurde nun gefunden, daß man Alkenylaminoalkan-1,1-diphosphonate mit ungesättigten Carbonsäuren copolymerisieren kann und die erhaltenen Copolymere die bekannten Eigenschaften der unterschiedlichen Monomeren in einer einzigen Verbindung vereinigen.

Gegenstand der vorliegenden Erfindung sind Alkenylamino-alkan-1,1-diphosphonate der Formel 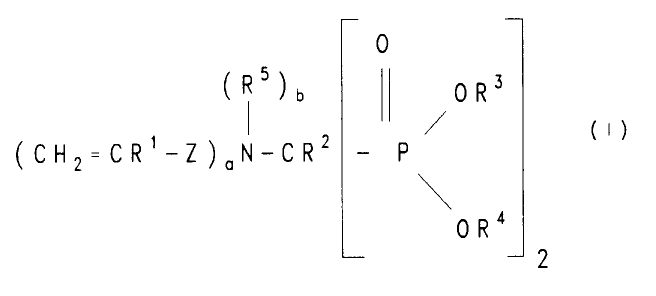
wobei
- R¹: gleich Wasserstoff oder Methyl,
- R²: gleich Wasserstoff oder C₁-C₁₀-Alkyl,
- R³: gleich C₁-C₄-Alkyl oder Phenyl,
- R⁴: gleich Wasserstoff oder ein Kation, vorzugsweise Natrium, Kalium oder Ammonium,
- R⁵: gleich C₁-C₂₂-Alkyl, C₃-C₂₂-Alkenyl, bevorzugt Propenyl
- Z: gleich C₁-C₃-Alkyl und
- a: 1 oder 2, b gleich 0 oder 1, a + b gleich 2.

Die erfindungsgemäßen Alkenylaminoalkan-1,1-diphosphonate der Formel I werden vorteilhafterweise durch Vermischen eines Diesters der phosphorigen Säure, eines Alkylesters der ortho-Ameisensäure und eines Alkenylamins unter Zugabe eines Katalysators, wie Bortrifluoridetherat, gegebenenfalls in einem Lösungsmittel, und Umsetzung bei Temperaturen im Bereich von 50 bis 150°C unter Abdestillieren des entstehenden Alkohols und anschließender alkalischer Hydrolyse erhalten.

Üblicherweise werden 0,5 bis 2,0 Mol, bevorzugt 1,0 bis 1,3 Mol Alkylester der ortho-Ameisensäure und 1,5 bis 3,0 Mol, bevorzugt 2,0 bis 2,5 Mol Diester der phosphorigen Säure pro Mol des betreffenden Amins umgesetzt.

Als Diester der phosphorigen Säure sind beispielsweise Dialkylester mit C₁-C₅-Alkyl, wie Dimethylester, Diethylester, Diphenylester oder Alkylarylester, wie Benzylester geeignet.

Als Amine sind solche vorzuziehen deren Siedepunkt oberhalb des Siedepunkts des sich bildenden Alkohols liegt, z.B. 3-Methylamino-propen-(1); 3-Ethylamino-propen-(1); 3-Butylamino-propen-(1); 3-Heptylamino-propen-(1); 3-Amino-buten-(1); 4-Amino-buten-(1); 4-Ethylamino-buten-(1); 3-Amino-2-methyl-propen-(1); 3-Methylamino-2-methyl-propen-(1); Diallylamin; Dimethallylamin; 3-Amino-penten-(1); 4-Amino-penten-(1); 5-Amino-penten-(1). Besonders bevorzugt ist Diallylamin.

Als Alkylester der ortho-Ameisensäure sind C₁-C₄-Alkylester, insbesondere ortho-Ameisensäureethylester geeignet.

Geeignete Lösungsmittel sollen einen Siedepunkt besitzen, der oberhalb des Siedepunktes des sich bildenden Alkohols liegt, wobei bevorzugt Toluol, Xylol, Dichlorbenzol, Dimethylformamid, Dimethylsulfoxid oder Nitrobenzol eingesetzt werden.

Die bei der vorstehend beschriebenen Umsetzung gebildeten Alkenylaminoalkandiphosphonsäureester werden bevorzugt durch Zusatz von Laugen, wie Natronlauge, Kalilauge oder Ammoniakwasser zu den erfindungsgemäßen Verbindungen der Formel I hydrolysiert. Diese alkalische Hydrolyse besitzt gegenüber einer Hydrolyse mit Säure, wie Salzsäure den Vorteil, daß die Bildung des gesundheitsschädlichen Ethylchlorids unterbleibt. Die bei der alkalischen Hydrolyse anfallenden Salze der Verbindungen der Formel I werden in hoher Reinheit und Ausbeute gewonnen und können direkt zur erfindungsgemäßen Copolymerisation eingesetzt werden. Durch Zugabe von vorzugsweise äquimolarer Menge an Säure, wie Salzsäure werden die Salze der Verbindungen der Formel I in die entsprechenden Säuren überführt.

Gegenstand der Erfindung sind weiterhin Copolymere enthaltend
0,1 bis 50 Mol%, bevorzugt 1 bis 15 Mol% mindestens einer Alkenylaminoalkan-1,1-diphosphonat-Einheit der Formel I wobei
R³ zusätzlich Wasserstoff oder ein Kation, wie Natrium, Kalium oder Ammonium bedeutet und
99,9 bis 50 Mol%, bevorzugt 99 bis 85 Mol% mindestens einer Carbonsäure-Einheit der Formel

R⁶R⁷C=CR⁸Y (II)

wobei
R⁶ und R⁷ unabhängig voneinander für Wasserstoff, Phenyl oder eine Gruppe der Formel COOM stehen,
R⁸ für Wasserstoff, Methyl, Phenyl oder eine Gruppe der Formel -CH₂-COOM steht,
Y für eine Gruppe der Formel -COOM steht oder
R⁷ und R⁸ zusammen für einen C₄-Alkylenrest,
R⁷ und Y zusammen für eine Gruppe der Formel -C(O)-O-C(O)- oder
R⁸ und Y zusammen für eine Gruppe der Formel -CH₂-C(O)-O-C(O)- stehen und in der M für Wasserstoff, C₁-C₆-Alkyl oder ein Kation, vorzugsweise Natrium, Kalium oder Ammonium steht, mit der Maßgabe, daß die Monomere der Formel II eine oder zwei Carbonsäureeinheiten der Formel -C(O)-O- tragen und
0 bis 10 Mol-% weiterer ethylenisch ungesättigter Monomere enthalten.

Geeignete Monomere der Formel I sind stellvertretend Diallylamino-methan-1,1-diphosphonsäure, Diallylamino-methan-1,1-diphosphonsäure-diethylester-dinatriumsalz, Diallylaminomethan-1,1-diphosphonsäure-diethylester-dikaliumsalz, N-Methyl-allylamino-methan-1,1-diphosphonsäure, N-Methyl-allylamino-methan-1,1-diphosphonsäure-dinatriumsalz.

Geeignete Monomere der Formel II sind stellvertretend Acrylsäure, Methacrylsäure, Maleinsäure, Maleinsäureanhydrid, Itaconsäure und Zimtsäure sowie deren niedere Alkylester wie Acrylsäuremethylester und Methacrylsäuremethylester.

Neben diesen Monomeren können zusätzlich auch weitere ethylenisch ungesättigte Monomere wie Vinylsulfonsäure, Vinylphosphonsäure, Vinylpyrrolidon, N-Vinylacetamid, Acrylamid sowie dessen N- und N,N-Substitutionsprodukte wie N-Methyl-acrylamid oder 2-Acrylamido-2-methylpropansulfonsäure, und auch (Meth)allylverbindungen wie z. B. (Meth)allylamin, Diallylamin und deren Substitutionsprodukte wie Methyldiallylamin, Octyldiallylamin, Diallyldimethylammoniumchlorid, Allylamino-bis(methylenphosphonsäure), Allylamino-benzyliden-phosphonsäure und Diallylamino-methylenphosphonsäure dem Polymersiationssystem zugefügt werden. Die bevorzugte Menge dieser Comonomere liegt dabei zwischen 0,001 und 10 Mol-%.

Die erfindungsgemäßen Copolymeren werden hergestellt, indem man Verbindungen der Formel I als Reinstoff oder verunreinigt mit Neutralisationssalzen, wie Natriumchlorid oder Natriumsulfat in Wasser oder in mit Wasser mischbaren organischen Lösungsmitteln bei 20 bis 100 °C, bevorzugt bei 40 bis 80 °C vorlegt und nacheinander oder gleichzeitig mit Verbindungen der Formel II und gegebenenfalls weiteren ethylenisch ungesättigten Monomeren und einem Radikalkettenstarter, beispielsweise Ammoniumperoxodisulfat, Wasserstoffperoxid oder auch tert.-Butylhydroperoxid versetzt. Die Gesamtmonomerkonzentration beträgt vorzugsweise 1 bis 60 Gew.-%, besonders bevorzugt 10 bis 60 Gew.-% bezogen auf das Gesamtgewicht des Reaktionsansatzes. Handelt es sich um wasserunlösliche Alkenylaminoalkandiphosphonsäuren, so können diese durch Überführung in ihre Alkali- oder Ammoniumsalze in Lösung gebracht werden. Die Zugabe des gegebenenfalls in einem geeigneten Lösungsmittel gelösten Radikalstarters in das Reaktionsgefäß kann gleichzeitig mit oder auch nach der Zugabe der Verbindungen der Formeln I und II erfolgen.

Die Erzielung eines für die erfindungsgemäße Verwendung geeigneten Molekulargewichts kann durch den Einsatz von niederen Alkoholen als Lösungsmittel oder auch durch Zusatz von 0,001 bis 30 Gew.% Regler wie Thioglykolsäure, Thioethanol, Ethanthiol, Dodecanthiol, hypophosphorige Säure, Natriumhydrogensulfit zum Reaktionsansatz erreicht werden. Das Molekulargewicht der erfindungsgemäßen Copolymeren wird durch ihre Verwendung bestimmt, unterliegt im Prinzip aber keinen Beschränkungen. Die bevorzugte Eigenviskosität K (Bestimmung nach Ubbelohde) der Polymeren liegt z. B. für die Verwendung als Steinverhinderer zwischen 10 und 100, insbesondere zwischen 10 und 50.

Die viskosen Polymerlösungen können je nach Verwendungszweck verdünnt, sprühgetrocknet und/oder mit Basen auf den gewünschten pH-Wert gebracht werden.

Die erfindungsgemäßen Copolymeren vereinigen die bekannten Eigenschaften der Polyacrylate mit denen der Aminoalkan-1,1-diphosphonsäurederivate in einer einzigen Verbindung. In salinen Formationswässern führen sie zu einer wirksamen Inhibierung sowohl von Erdalkalicarbonat- als auch Erdalkalisulfatablagerungen.

Weiterhin können sie als Erdalkali- und Schwermetallkomplexbildner und/oder Sequestriermittel u.a. bei der Textil und Papierbleiche und auf Grund ihrer hervorragenden Dispergierwirkung auf Calciumcarbonat als Builder und Co-Builder in Waschmitteln verwendet werden.
Zur Verhinderung der Steinbildung können sie in den Bereichen Maschinenreinigung, Flaschenreinigung, Dampfproduktion, Kühlwasserbehandlung und Wasseraufbereitung eingesetzt werden.

Die folgenden Beispiele sollen die Erfindung erläutern ohne sie einzuschränken.

### Beispiele

Die Prozentangaben sind, sofern nicht anders angegeben, als Gewichtsprozente zu verstehen. Das in den Beispielen verwendete Wasser ist entionisiert. Die Eigenviskositätswerte K wurden nach Ubbelohde bei 25 °C in Wasser bei einer Polymerkonzentration von 5 Gew.-% bestimmt.
Die Polymerisationen wurden in 1 l 5-Halskolben mit plangeschliffenem Deckel durchgeführt. Die Kolben sind ausgestattet mit Ankerrührer, Thermometer, Rückflußkühler, Gaseinleitungsrohr und Tropftrichter. Die zur Polymerisation vorgelegten Lösungen wurden mit Stickstoff gespült.

### Beispiel 1

### Herstellung von Diallylamino-methan-1,1-diphosphonsäure-diethylester-dinatriumsalz

Die Herstellung von Diallylaminomethan-1,1-diphosphonsäureester erfolgt gemäß JP-OS-53/423 49.
160 g (0.42 Mol) Diallylamino-methan-1,1-diphosphonsäure-tetraethylester werden in 300 ml 33 %ige Natronlauge aufgenommen und 4 Stunden unter Rückfluß gehalten. Der sich dabei bildende farblose Niederschlag des Dinatriumsalzes wird abgesaugt, in 50 ml Ethanol verrührt und erneut abgesaugt. Das farblose Produkt wird nochmals mit 40 ml Methanol gewaschen und getrocknet. Dabei erhält man 58 g (38 % d. Th.) Diallylamino-methan-1,1-diphosphonsäure-diethylesterdinatriumsalz als farbloses Pulver mit einem Schmelzpunkt > 300 °C.
- ¹H-NMR (D₂O): =: 1,25 (t, 6H); 3,38 (t, 1H, J_{P-C-H} = 24 Hz); 3,50 (m, 4H); 3,93 (m, 4H; 5,08 - 5,40 (m, 4H); 5,68 - 6,10 (m, 2H).
- ³¹P-NMR (D₂O): =: 18,4 ppm, ²J_{p-H} = J_{P-C-H} = 23,65 Hz

### Beispiel 2

### Darstellung von Diallylamino-methan-1,1-diphosphonsäure-diethylester-dikaliumsalz

Die Durchführung erfolgt analog Beispiel 1, jedoch werden hierfür 160 g (0,42 Mol) Diallylamino-methan-1,1-diphosphonsäure-diethylester und 300 ml 33 %ige Kalilauge verwendet. Man erhält auf diese Weise 66 g (38 % d. Th.) Diallylamino-methan-1,1-diphosphonsäure-diethylester-dikaliumsalz als farbloses Pulver mit einem Schmelzpunkt > 300 °C. Die spektroskopischen Daten entsprechen dem gemäß Beispiel 1 hergestellten Produkt.

### Beispiel 3

### Darstellung von Diallylaminomethan-1,1-diphosphonsäure

100 g (0,27 mol) Diallylaminomethan-1,1-diphosphonsäure-diethylester-dinatriumsalz werden mit 200 ml Salzsäure (37 %ig) 4 Stunden unter Rückfluß gekocht. Nach Entfernen des Lösemittels wird das Produkt mit einem Gemisch aus Ethanol und Petrolether 1:1 zur Kristallisation gebracht. Es werden 73 g (99,8 % d. Th.) Diallylaminomethan-1,1-diphosphonsäure erhalten. Zersetzungspunkt: 140 - 150 °C

### Beispiel 4

### Herstellung eines Copolymeren aus Acrylsäure und 10 % Diallylamino-methan-1,1-diphosphonsäure-diethylester-dinatriumsalz

5 g (0,013 mol) Diallylamino-methan-1,1-diphosphonsäure-diethylester-dinatriumsalz werden in einer Mischung aus 100 g Wasser und 20 g Isopropanol gelöst und unter Einleiten eines Stickstoffstroms auf 75 °C erwärmt. Bei dieser Temperatur werden synchron aus 2 Tropftrichtern eine Katalysatorlösung, bestehend aus 1,5 g (NH₄)₂S₂O₈ in 30 g Wasser, und 45 g Acrylsäure zugetropft. Nach Beendigung der exothermen Reaktionsphase wird 2 Stunden bei 80 °C nachgeheizt. Die farblose, 26 %ige Polymerlösung hat eine Eigenviskosität K von 21.

### Beispiel 5

### Herstellung eines Copolymers aus Acrylsäure und 20 % Diallylamino-methan-1,1-diphosphonsäure

10,0 g (0,037 mol) Diallylamino-methan-diphosphonsäure werden in einer Mischung aus 80 g Wasser und 40 g Isopropanol gelöst und wie in Beispiel 4 beschrieben mit 40,0 g (0,56 mol) Acrylsäure copolymerisiert. Das resultierende Polymer hat eine Eigenviskosität K von 21.

### Beispiel 6

### Herstellung eines Copolymers aus Acrylsäure und 20 % Diallylamino-methan-diphosphonsäure-diethylester-dikaliumsalz

10,0 g (0,025 mol) Diallylamino-methan-1,1-diphosphonsäure-diethylester-dikaliumsalz werden wie in Beispiel 5 beschrieben, mit 40,0 g (0,56 mol) Acrylsäure copolymerisiert. Das resultierende Polymer hat eine Eigenviskosität von 23.

### Beispiel 7

### Herstellung eines Copolymers aus Acrylsäure und Diallylamino-methan-1,1-diphosphonsäure unter Verwendung von H₂O₂ als Radikalkettenstarter

Die Herstellung erfolgt analog Beispiel 4 unter Verwendung von 1,5 g H₂O₂ als Katalysator. Das resultierende Polymer hat eine Eigenviskosität K von 19.

### Beispiel 8

### Herstellung eines Terpolymers aus Acrylsäure, Maleinsäureanhydrid und Diallylamino-methan-1,1-diphosphonsäure-diethylester-dinatriumsalz

7,5 g (0,02 mol) Diallylamino-methan-1,1-diphosphonsäure-diethylester-dinatriumsalz und 20,25 g (0,02 mol) Maleinsäureanhydrid werden in einer Mischung aus 120 g Wasser und 60 g Isopropanol gelöst und unter Durchleiten eines Stickstoffstroms auf 80 °C erhitzt. Bei dieser Temperatur werden synchron aus 2 Tropftrichtern eine Katalysatorlösung, bestehend aus 2,25 g (NH₄)₂S₂O₈ in 45 g Wasser, und 47,25 g (0,66 mol) Acrylsäure zugetropft. Nach Beendigung der exothermen Reaktionsphase wird 4 Stunden bei 80 °C nachgerührt. Das resultierende Polymer hat eine Eigenviskosität K von 23.

### Beispiel 9

### Herstellung eines Terpolymers aus Methacrylsäure, 2-Acrylamido-2-methylpropansulfonsäure und Diallylamino-methan-1,1-diphosphonsäure

5 g (0,018 mol) Diallylamino-methan-1,1-diphosphonsäure werden in einer Mischung aus 60 g Wasser und 40 g Isopropanol gelöst und unter Durchleiten eines Stickstoffstroms auf 80 °C erhitzt. Bei dieser Temperatur werden über einen Zeitraum von 2 Stunden parallel aus zwei Tropftrichtern eine Lösung von 5 g 2-Acrylamido-2-methylpropansulfonsäure und 40 g Methacrylsäure in 20 g Wasser sowie eine Katalysatorlösung bestehend aus 1,5 g (NH₄)₂S₂O₈ in 30 g Wasser zugetropft. Nach Beendigung der exothermen Reaktionsphase wird 3 Stunden bei 80 °C nachgeheizt. Das resultierende Polymer hat einen K-Wert von 26.

### Beispiel 10

### Herstellung eines Copolymers aus Acrylsäure und Diallylamino-methandiphosphonsäure mit hohem K-Wert

5 g (0,018 mol) Diallylamino-methan-1,1-diphosphonsäure werden in 100 g Wasser gelöst und bei 50 °C wie in Beispiel 4 beschrieben mit 45 g (0,63 mol) Acrylsäure copolymerisiert. Es wird eine farblose, 34 %ige Polymerlösung erhalten. Das Copolymer hat eine Eigenviskosität K von 50.

### Anwendungstechnische Beispiele:

### 1. Steinverhinderung Bariumsulfat

Die steinverhindernde Wirkung wird mit einem Rohrverstopfungstest (tube plugging test) nachgewiesen. Das Prinzip besteht in der Verfolgung des Druckaufbaus innerhalb einer flüssigkeitsdurchströmten, thermostatisierten Kapillare durch Ablagerung von Feststoffen. Gewählt wird ein kommerzielles Gerät der Fa. S.B. Systems, Aberdeen, des Typs PMAC.

Beim Prüfen auf die Verhinderung von Bariumsulfatablagerungen werden folgende Lösungen gemischt:
- Lösung 1:: 74,92 g/l NaCl
0,93 g/l Na₂SO₄
2,35 g/l NaHCO₃
- Lösung 2:: 70,09 g/l NaCl
1,21 g/l BaCl₂
1,93 g/l CaCl₂x2H₂O
3,81 g/l MgCl₂x6H₂O
Mit einer Schlauchpumpe werden die beiden Lösungen bei kontinuierlicher Vermischung in einer Mischstrecke durch eine Edelstahlkapillare von 1,1 mm innerem Durchmesser gepumpt. Ein empfindlicher Drucksensor registriert den Druckanstieg in der auf 70 °C temperierten Kapillare.

Ein leichter Anstieg auf ca. 0,2 bar wird abgewartet, um die Abscheidung einer geringen Bariumsulfatmenge auf der Stahloberfläche zu erzeugen. Dann wird die inhibitorfreie Lösung 1 rasch durch eine inhibitorhaltige Lösung gleicher Zusammensetzung ersetzt. Bleibt der Druck konstant, wird auf erfolgreiche Inhibierung der BaSO₄-Abscheidung geschlossen. Steigt der Druck an, ist die Inhibitormenge bzw. bei gleicher Konzentration die Art des Inhibitors ungenügend zur Verhinderung der Steinbildung. Für die Effektivitätsbeurteilung wurde somit die minimale Konzentration an Inhibitor genommen, die gerade noch die Ablagerung verhindert.

In vergleichenden Versuchen wurden mit diesem Verfahren folgende Abstufungen beobachtet:
In den folgenden Tabellen bedeutet ein + + +-Zeichen die erfolgreiche Inhibierung der Scalebildung und ein ----Zeichen dementsprechend die Nichtverhinderung von Scale.

| Menge Inhibitor (ohne Lösemittel) | | | | | |
|---|---|---|---|---|---|
| Produkt | 30 ppm | 20 ppm | 17,5 ppm | 15 ppm | 10 ppm |
| Beispiel 4 | + + + | + + + | --- | --- | --- |
| Beispiel 5 | + + + | + + + | + + + | --- | --- |
| Beispiel 6 | + + + | + + + | + + + | + + + | --- |

Die erfindungsgemäßen Verbindungen zeigen schon bei niedrigen Konzentrationen eine Wirkung gegen Bariumsulfatsteinablagerungen.

### 2. Steinverhinderung Calciumcarbonat

Beim Prüfen auf die Verhinderung von Calciumcarbonatablagerungen werden folgende Lösungen gemischt:
- Lösung 1:: 23,0 g/l NaCl
2,14 g/l CaCl₂x2H₂O
0,38 g/l MgCl₂x6H₂O
0,84 g/l KCl
- Lösung 2:: 23,0 g/l NaCl
5,0 g/l NaHCO₃
Mit einer Schlauchpumpe werden die beiden Lösungen kontinuierlich durch eine Mischzelle und anschließend durch eine Edelstahlkapillare von 1,1 mm innerem Durchmesser gepumpt. Ein empfindlicher Drucksensor registrierte den Druckanstieg in der auf 80 °C temperierten Kapillare.

Ein Anstieg auf ca. 0,2 bar wird abgewartet, um die Abscheidung einer dünnen Calciumcarbonatschicht auf der Stahloberfläche zu erzeugen. Dann wird über eine zweite Pumpe der Scaleinhibitor kontinuierlich in die Mischzelle zudosiert. Bleibt der registrierte Druck konstant, wird auf erfolgreiche Inhibierung der CaCO₃-Abscheidung geschlossen. Steigt der Druck an, ist die Inhibitormenge bzw. bei gleicher Konzentration die Art des Inhibitors ungenügend zur Verhinderung der Steinbildung. Für die Effektivitätsbeurteilung wird somit die minimale Konzentration an Inhibitor genommen, die gerade noch die Ablagerung verhindert.

In vergleichenden Versuchen werden mit diesem Verfahren folgende Abstufungen beobachtet:

| Menge Inhibitor (ohne Lösemittel) | | | | | | |
|---|---|---|---|---|---|---|
| Produkt | 20 ppm | 15 ppm | 12 ppm | 10 ppm | 8 ppm | 6 ppm |
| Beispiel 4 | + + + | + + + | + + + | + + + | --- | --- |
| Beispiel 5 | + + + | + + + | + + + | + + + | + + + | + + + |
| Beispiel 6 | + + + | + + + | + + + | + + + | + + + | --- |
| Beispiel 9 | + + + | + + + | --- | --- | --- | --- |

Die erfindungsgemäßen Verbindungen zeigen bei niedrigen Konzentrationen eine Wirkung gegen Calciumcarbonatablagerungen.

Die sich hieraus ergebende höhere Effektivität der beanspruchten Verbindungsklasse gegenüber den Handelsprodukten ergibt sich bemerkenswerterweise bei der Verhinderung sowohl von Bariumsulfat- als auch von Calciumcarbonatablagerungen. Dieser Umstand ist von besonderer Bedeutung, da beide Steinarten gerade bei der Meerwasserinjektion in Erdöllagerstätten z. B. der Nordsee gemeinsam auftreten können.

### 3. Calciumbindevermögen und Calciumdispergierung

Die Versuchsergebnisse mit der Ca²⁺-empfindlichen Elektrode (Puffer: 0,03 N NH₄Cl + 0,07 N NH₃) ergeben nach Extrapolation der Meßkurven auf C_{Polymer} = 0 folgende Bindungskonstanten:

| | mmol Ca²⁺ / g Polymer |
|---|---|
| Beispiel 5 | 4,3 |
| Beispiel 8 | 4,5 |
| Vergleichsbeispiel | 4,0 |

Die erfindungsgemäßen Copolymeren binden Ca²⁺ besser als das im Vergleich gemessene Natrium-Polyacrylat (MW = 27.000).

Die Dispergierung von Calciumcarbonat wird nach der Filtriermethode bestimt. Dabei wird CaCO₃ in Anwesenheit des zu untersuchenden Polymers ausgefällt (Testbedingungen: 4 mmol CaCl₂, 4,4 mmol Na₂CO₃, 2 mmol NaOH, 250 ppm Polymer, 40 °C) und der durch ein Filter gehende Anteil des Calciums bestimmt.

| | mmol Ca²⁺ / g Polymer |
|---|---|
| Beispiel 5 | 97 % |
| Beispiel 8 | 97 % |
| Vergleichsbeispiel | 90 % |

Auch bezüglich des Calciumdispergiervermögens zeigen die erfindungsgemäßen Polymeren bessere Eigenschaften als das zum Vergleich gemessene Natrium-Polyacrylat (MW ca. 27.000).

## Patentansprüche

1. Alkenyl-aminoalkan-1,1-diphosphonsäurederivate der Formel I 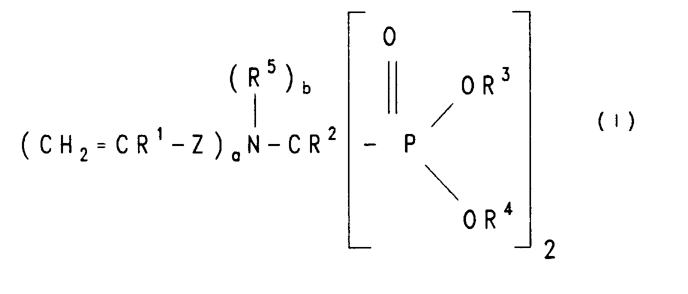 wobei
R¹ gleich Wasserstoff oder Methyl,
R² gleich Wasserstoff oder C₁-C₁₀-Alkyl,
R³ gleich C₁-C₄-Alkyl oder Phenyl,
R⁴ gleich Wasserstoff oder ein Kation vorzugsweise Natrium, Kalium oder Ammonium,
R⁵ gleich C₁-C₂₂-Alkyl, C₃-C₂₂-Alkenyl, bevorzugt Propenyl,
Z gleich C₁-C₃-Alkyl und
a gleich 1 oder 2, b gleich 0 oder 1, a+b gleich 2.

2. Verfahren zur Herstellung von Alkenyl-aminoalkan-1,1-diphosphonsäurederivaten nach Anspruch 1, dadurch gekennzeichnet, daß eine Mischung aus Alkenylamin (A), ortho-Ameisensäure-alkylester (B) und Diester der phosphorigen Säure (C) in Gegenwart eines Katalysators, gegebenenfalls in einem Lösungsmittel, bei Temperaturen im Bereich von 50 bis 150°C umgesetzt werden, wobei die Komponenten A:B:C im Molverhältnis 1:0,5-2,0:1,5-3,0 zu Beginn der Umsetzung in der Mischung vorliegen und anschließend einer alkalischen Hydrolyse und gegebenenfalls Zugabe von vorzugsweise äquimolaren Mengen an Säure unterworfen werden.

3. Copolymere enthaltend 0,1-50 Mol-%, bevorzugt 1-15 Mol-% mindestens einer Alkenylaminoalkan-1,1-diphosphonat-Einheit der Formel I 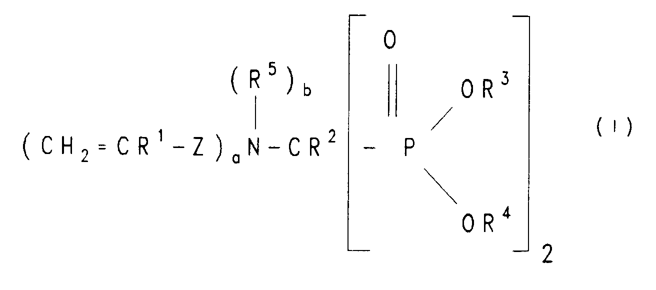 wobei
R¹ gleich Wasserstoff oder Methyl,
R² gleich Wasserstoff oder C₁-C₁₀-Alkyl,
R³ gleich C₁-C₄-Alkyl oder Phenyl und
R³ und R⁴ unabhängig voneinander für Wasserstoff oder ein Kation, wie Natrium, Kalium oder Ammonium stehen,
R⁵ gleich C₁-C₂₂-Alkyl, C₃-C₂₂-Alkenyl, bevorzugt Propenyl,
Z gleich C₁-C₃-Alkyl und
a gleich 1 oder 2, b = 0 oder 1, a+b gleich 2
und 99,9-50 Mol-%, bevorzugt 99-85 Mol-% mindestens einer Carbonsäure-Einheit der Formel II
R⁶R⁷C=CR⁸-Y (II)
wobei R⁶ und R⁷ unabhängig voneinander für Wasserstoff, Phenyl oder eine Gruppe der Formel COOM stehen,
R⁸ für Wasserstoff, Methyl, Phenyl oder eine Gruppe der Formel CH₂-COOM steht,
Y für eine Gruppe der Formel COOM steht oder
R⁷ und R⁸ zusammen für einen C₄-Alkylenrest,
R⁷ und Y zusammen für eine Gruppe der Formel -C(O)-O-C(O)- oder
R⁸ und Y zusammen für eine Gruppe der Formel -CH₂-C(O)-O-C(O)- stehen und
in der M für Wasserstoff, niederes Alkyl oder ein Kation wie Natrium, Kalium oder Ammonium steht, mit der Maßgabe, daß die Monomere der Formel II eine oder zwei Carbonsäureeinheiten der Formel -C(O)-O- enthalten und 0 bis 10 Mol-% weiterer ethylenisch ungesättigter Monomereinheiten.

4. Copolymere nach Anspruch 3, dadurch gekennzeichnet, daß sie als Monomere der Formel I Diallylamino-methandiphosphonsäure und/oder Diallylaminomethan-diphosphonsäure-diethylester-dinatriumsalz und/oder Diallylaminomethandiphosphonsäure-diethylester-dikaliumsalz einpolymerisiert enthalten.

5. Copolymere nach Anspruch 3 oder 4, dadurch gekennzeichnet, daß sie als Monomere der Formel II Acrylsäure, Methacrylsäure, Maleinsäure, Maleinsäureanhydrid, Itaconsäure und/oder deren niedere Alkylester einpolymerisiert enthalten.

6. Verfahren zur Herstellung der Copolymeren nach einem der Ansprüche 3 bis 5, dadurch gekennzeichnet, daß man 0,1 bis 50 Mol-% der Monomere der Formel I mit 99,9 bis 50 Mol-% der Monomere der Formel II und gegebenenfalls 0 bis 10 Mol-% der weiteren ethylenisch ungesättigten Monomere in Wasser und/oder in einem mit Wasser mischbaren Lösemittel, gegebenenfalls unter Zugabe eines Reglers, in Gegenwart eines Radikalkettenstarters bei Temperaturen von 20 bis 100°C, bevorzugt 40 bis 80 °C polymerisiert.

7. Verfahren nach Anspruch 6, dadurch gekennzeichnet, daß die Gesamtmonomerkonzentration 1 bis 60 Gew.-%, bevorzugt 10 bis 60 Gew.-%; bezogen auf das Gesamtgewicht des Reaktionsansatzes, beträgt.

8. Verwendung der Copolymeren nach Anspruch 3 zur Verhinderung der Steinbildung, als Erdalkali- und Schwermetallkomplexbildner und/oder Sequestriermittel und als Builder und Co-Builder in Waschmitteln.
